(19) Europäisches Patentamt
European Patent Office
Office européen des brevets

(11) EP 2 461 064 B1

(12) **EUROPEAN PATENT SPECIFICATION**

(45) Date of publication and mention of the grant of the patent:
**30.07.2014 Bulletin 2014/31**

(51) Int Cl.:
***F16D 48/06*** *(2006.01)*

(21) Application number: **11190348.0**

(22) Date of filing: **23.11.2011**

(54) **Method and system for assessment of clutch wear**

Verfahren und System zur Einschätzung der Kupplungsabnutzung

Système et procédé d'évaluation de l'usure de l'embrayage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2010 SE 1051274**

(43) Date of publication of application:
**06.06.2012 Bulletin 2012/23**

(73) Proprietor: **Scania CV AB**
**151 87 Södertälje (SE)**

(72) Inventor: **Andersson, Jonny**
**151 68 Södertälje (SE)**

(56) References cited:
**WO-A1-03/087614**
**WO-A1-2006/131268**
**WO-A1-2010/059110**
**DE-A1-102004 023 581**
**DE-A1-102005 061 080**
**DE-A1-102006 037 389**
**DE-C1- 19 639 296**
**GB-A- 2 297 369**
**SE-A1- 0 950 384**
**US-A1- 2006 004 506**
**US-A1- 2010 113 216**
**US-A1- 2010 200 357**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the invention

The present invention relates to assessment of wear in a clutch of a vehicle and particularly the driver's wear of a friction clutch according to the introduction to the independent claims.

Background to the invention

The driver's influence on vehicle wear is often considerable. Clutch wear is very often driver-related. In particular, the move-off sequence may wear the clutch when the driver does not act correctly, and also when heavy loads occur.

A clutch in a motor vehicle with manual gear changing is fitted between the engine and the gearbox to convey the energy from the engine to the propeller shaft. The commonest type of clutch used in vehicles is the friction clutch. It comprises one or more discs with friction linings which are pressed against a flywheel by a pressure plate, resulting in direct drive between engine and gearbox when the vehicle is running. Pressing the clutch pedal down reduces progressively the pressure exerted on the disc by the pressure plate, causing the clutch to begin to slip. When the pedal is fully depressed, the engine is disconnected from the gearbox. The transfer of force between pedal and clutch may be mechanical, hydraulic or semi-hydraulic.

Particularly in heavy vehicles, clutch wear is a problem because the clutch is subject to large forces. The driver of a heavy vehicle sometimes races the engine before setting the vehicle in motion, in an attempt to avoid the vehicle generally having too little power to move off uphill, or to avoid its rolling backwards. However, moving off at high engine speed entails great risk of clutch wear.

As clutch replacement may cost the vehicle owner a great deal of money, there is an incentive to train the driver in good behaviour.

US2010/200357 describes an alarm device for a clutch that issues an alarm prior to the lifetime expiration of the clutch. This document discloses a system for assessing a drivers wear of friction clutch according to the preamble of claim 1.

EP1482196 describes a method for calculating the wear on a friction clutch in a vehicle. Various kinds of operating data are saved for use on the occasion of, for example, servicing.

DE102008007559 describes a monitoring device which uses sensors for determining whether incorrect gears are used relative to torque. Incorrect gears are indicated to the driver by a warning signal.

WO2010020520 describes a method for detecting clutch wear by comparing an actual pattern with a desired pattern on the clutch actuators.

WO0172546 describes a method and apparatus for indicating wear in a friction clutch of a vehicle. A value is calculated for the energy released in the clutch on the basis of engine torque and clutch slip. When there is risk of clutch overload, the driver is warned. However, this system does not identify what the driver has done wrong during the clutch sequence.

The above systems and methods identify only high clutch wear. They therefore cannot identify what the driver has done wrong, with a view to being able to help him/her to achieve better behaviour. Nor is there generally any feedback from setting the vehicle in motion well, which is also an important part of the learning process. No account is taken of occasions when the vehicle is set in motion many times in succession, which contributes to raised temperatures in the clutch discs and consequently increased wear.

The object of the present invention is to propose an improved method for reducing clutch wear in vehicles.

Summary of the invention

The object described above is achieved by a system for assessing a driver's wear of a friction clutch situated between a gearbox and an engine in a vehicle according to claim 1. The system comprises a calculation unit adapted to determining a value of the clutch energy $E_{slip}$ during a slip period, depending on the vehicle's power output $P_{eng}$ and the clutch slip s, and to generating an energy signal which indicates said value of $E_{slip}$, a comparison unit adapted to comparing the calculated value of the clutch energy $E_{slip}$ with limits for the clutch energy and to generating a comparison signal $S_c$ which indicates the result of said comparison, a rating unit adapted to rating clutch wear on the basis of said result and to generating a rating signal Sg which indicates said rating, and an indicating unit adapted to feeding the rating back to the driver.

According to the invention, the object is achieved by a method for assessing a driver's wear of a friction clutch which comprises:

- determining a value of the clutch energy $E_{slip}$ during a slip period, depending on the vehicle's power output $P_{eng}$

and the clutch slip s, and generating an energy signal which indicates said value of $E_{slip}$;

- comparing the calculated value of the clutch energy $E_{slip}$ with limits for the clutch energy, and generating a comparison signal which indicates the result of said comparison;
- rating the clutch wear on the basis of said result and generating a rating signal which indicates said rating; and
- feeding the rating back to the driver.

In this way the driver may receive feedback about his/her clutch behaviour, particularly when setting the vehicle in motion, in order thereby to learn to handle the move-off sequence well. He/she may also, even before starting to set the vehicle in motion, be given tips or reminders to help him/her to avoid unnecessary clutch wear. This will result in less clutch wear and no need for the clutch to be changed as often, thereby saving money.

The assessment of clutch wear is done by calculating the energy lost through the clutch when, for example, the vehicle is being set in motion. Calculating this energy may sometimes be difficult if there are no sensors to show which gear the driver chose. Calculations of the clutch energy may therefore be completed when the process of setting the vehicle in motion has ended and the initial gear can be determined by estimation.

Preferred embodiments are described in the dependent claims and the detailed description.

Brief description of the attached drawings

The invention is described below with reference to the attached drawings, in which:

Figure 1 is a schematic diagram of a friction clutch.

Figure 2 is a block diagram of the system according to an embodiment of the invention.

Figure 3 depicts an example of clutch wear rating.

Figure 4 depicts an example of energy limits $E_{HIGH}$ and $E_{LOW}$ as a function of clutch temperature. At $T_{warn}$ the driver is given a reminder to use a lower initial gear than normal. At $T_{critical}$ a very low gear is needed to meet wear requirements.

Figure 5 illustrates parameters used for identifying initial gears which are too high.

Figure 6 is a schematic diagram of a friction clutch and the pattern of heat flow.

Figure 7 is a flowchart of a method according to an embodiment of the invention.

Figure 8 is a flowchart of a method according to a further embodiment of the invention.

Detailed description of preferred embodiments of the invention

Figure 1 is a schematic diagram of a friction clutch 1 and nearby parts. The engine speed $n_{eng}$ and power output $P_{eng}$ are conveyed via the clutch 1 and the gearbox 2 to a driveshaft 11 which transmits a driveshaft speed $n_p$ to the vehicle's wheels. The gear set for the gearbox at the time is illustrated as $i_{gear}$. The friction clutch 1 comprises one or more discs with friction linings which are pressed against a steel plate, e.g. by powerful springs and a pressure plate, resulting in direct drive between engine and gearbox when the vehicle is running. Pressing the clutch pedal down reduces progressively the pressure exerted on the disc by the pressure plate, causing the clutch to begin to slip. The slip results in a speed difference between the parts of the clutch which are pressed together, here the pressure plate and the disc. This means that the parts wear one another by friction. When the clutch pedal is fully depressed, the engine is almost entirely disconnected from the gearbox.

Figure 2 is a block diagram of a system for assessing a driver's wear of a friction clutch 1. The system comprises a calculation unit 3 adapted to determining a value of the clutch energy $E_{slip}$ generated during a slip period, depending on the power output $P_{eng}$ and the clutch slip s, and to generating an energy signal which indicates said value of $E_{slip}$. The clutch energy may be determined by using the equations set out below. The instantaneous gear ratio between engine and driveshaft, including the clutch, is calculated by the equation

$$i_{transfer} = \frac{n_{eng}}{n_p} \qquad (1)$$

The ratio in the initial gear $i_{gear}$ may be unknown when the vehicle is being set in motion. The instantaneous slip s may be calculated by the equation

$$s = \frac{i_{transfer} - i_{gear}}{i_{transfer}} \qquad (2)$$

The power output conveyed to the clutch then becomes

$$P_{slip} = P_{eng} \cdot s \qquad (3)$$

When the clutch slips, the clutch energy $E_{slip}$ is arrived at by the calculations

$$E_{slip} = \int P_{slip} = \int P_{eng} \cdot s = \int P_{eng} - \int (\frac{P_{eng}}{i_{transfer}}) \cdot i_{gear} \qquad (4)$$

in which $i_{gear}$ is still unknown. As $i_{gear}$ is unknown, two energies are calculated during the period when the driver is sliding the clutch:

$$E_1 = \int P_{eng} \qquad (5)$$

$$E_2 = \int (\frac{P_{eng}}{i_{transfer}}) \qquad (6)$$

According to this embodiment, the calculation unit 3 is therefore adapted to determining the value of the clutch energy $E_{slip}$, which comprises integrating the value of the power output $P_{eng}$, and the power output $P_{eng}$ divided by the gear ratio $i_{transf}$ during the slip period.

When moving off is completed and the vehicle is travelling, the initial gear can be estimated. The result is a value of $i_{gear}$ which makes it possible for the calculation to be completed by the equation

$$E_{slip} = E_1 - E_2 \cdot i_{gear} \qquad (7)$$

The system further comprises a comparison unit 4 adapted to comparing the calculated value of the clutch energy $E_{slip}$ with limits for the clutch energy, and to generating a comparison signal $S_c$ which indicates the result of said comparison. Figure 3 is a diagram of various clutch energies and how they are rated. The system comprises also a rating unit 5 adapted to rating the clutch wear on the basis of said result and generating a rating signal Sg which indicates said rating. The driver's behaviour is then scored on the basis of the calculated energy $E_{slip}$ lost through the clutch. A very large amount of clutch energy generated results in a low rating, and a small amount of clutch energy generated a high rating. The rating scale in Figure 3 runs from 0 to 100% but other scales, e.g. 0 to 10, would be equally possible. The system further comprises an indicating unit 6 adapted to feeding the rating back to the driver. The indicating unit may for example be a display in the vehicle's instrument panel which shows the vehicle's ratings in the form of numerals or symbols.

According to an embodiment, the system comprises a time unit 7 adapted to monitoring the driver's use of the clutch control by detecting a slip period $t_{slip}$ which is the time the driver takes to release the clutch from a disconnected state to a connected state. For example, pedal sensors may monitor the clutch pedal and detect its position in terms of closed and open.

To cater for wear being worse when the temperature in the clutch is high, the comparison unit 4 according to an embodiment is adapted to determining said limits for the clutch energy $E_{slip}$ with respect to the temperature of the clutch. This makes it possible to determine the clutch temperature limits within which the vehicle should be set in motion. Temperature sensors in the clutch may be avoided by using an estimate of the clutch temperature. Figure 4 illustrates an example of energy limits $E_{HIGH}$ and $E_{LOW}$ determined as a function of the clutch temperature.

The temperature in the clutch may be determined as follows. The material of the clutch may be divided into two kinds, viz. 1: clutch disc and 2: surrounding material (flywheel, clutch housing, air, etc.). The clutch disc is assumed to absorb heat when slipping and then transfer it to surrounding material which itself gives off heat to the surroundings. This is illustrated in Figure 6, in which the arrows indicate the direction of heat movement. Underlying formulae used for heat flow and thermal capacity are

$$\Delta Q = k \cdot A \cdot \frac{\Delta T}{d}[W], \tag{7}$$

which thus indicates the heat flow $\Delta Q$ at the temperature difference $\Delta T$. k is a constant for the material, A the area of the disc and d the thickness of the disc. The thermal capacity, i.e. the energy Q supplied to the disc, is calculated as

$$Q = m \cdot c \cdot \Delta T[J], \tag{8}$$

in which m is the weight of the material and c the thermal capacity. As the material constants are unknown, they are estimated by actual measurements of energy absorption and cooling. The calculations may therefore be shortened to $\Delta Q = k_{conduct} \cdot \Delta T$ for heat flow and $Q = k_{absorb} \cdot \Delta T$ for thermal capacity for the given components. $k_{absorb}$ is estimated by measuring the temperature increase when a given amount of energy is quickly supplied. The $k_{conduct}$ is estimated by measuring the cooling time for a component when $k_{absorb}$ is already known.

The energy supplied to the disc during clutch slip is assumed to result in a heat increase corresponding to

$$\Delta T_{disc} = \frac{E_{slip}}{k_{absorb_disc}}, \tag{9}$$

in which $k_{absorb-disc}$ thus denotes a constant for the heat absorption in the disc. The heat flow from disc to surrounding material is assumed to be

$$\Delta Q_{disc->cover} = k_{conduct_disc} \cdot (T_{disc} - T_{cover}) \tag{10}$$

and cooling of surrounding material is calculated as

$$\Delta Q_{cover->ambient} = k_{conduct_cover} \cdot (T_{cover} - T_{ambient}) \tag{11}$$

The temperatures then change during cooling according to the equations

$$T_{disc} = \frac{\int Q_{disc->cover}}{k_{absorb_disc}} \tag{12}$$

$$T_{cover} = \frac{\int (\Delta Q_{disc->cover} - \Delta Q_{cover->ambient})}{k_{absorb_cover}} \tag{13}$$

If not measured, the ambient temperature $T_{ambient}$ may for example be assumed to be a weighted average of engine temperature and air temperature. Cooling at higher speeds may also be taken into account.

Where the vehicle is repeatedly set in motion, the temperature in the clutch is calculated on the basis of the energy supplied $E_{slip}$ arrived at by the above calculations. On the basis of material constants and simple assumptions about cooling of the material, it is therefore possible to estimate the temperature, see calculations above. According to an embodiment, the system comprises a first monitoring unit 8 adapted to determining the temperature of the clutch and to generating a signal to the driver that the temperature in the clutch is high, if the vehicle has come to a halt and the temperature exceeds a predetermined threshold value. When the temperature of the disc $T_{disc}$ reaches a critical level $T_{warn}$ and the driver stops, he/she is thus given a reminder to be aware that the temperature in the clutch is high and that a lower initial gear than normal may therefore need to be used. At $T_{critical}$ a very low gear is required to meet the wear requirements.

On most trucks with manual gear changing it is possible on the basis of only three or four gear positions to have access to between eight and twelve gears. This is made possible inter alia by a range gear which divides the gears into a high-speed section and a low-speed section. When an inexperienced driver has driven for a while at high speed and then brings the vehicle to a halt, he/she may well forget to switch to low range before setting the vehicle in motion again. Moving off in high range contributes to clutch wear. The same problem may also arise with a gearbox in an ordinary vehicle which has no range gears but only the division between low and high gears. This division may vary depending on the vehicle's current situation. When setting it in motion, however, a low gear is preferable. To prevent wear, the system according to an embodiment comprises a second monitoring unit 9 adapted to detecting settings of the gearbox, and if it is in a high gear, the vehicle is stationary and the driver releases the brake pedal, the monitoring unit 9 is adapted to generating a signal to the driver that a high gear is set. When the brake pedal is released, an expected scenario is that acceleration will follow. The driver may thus be made aware that the vehicle is about to move off in too high a gear, enabling him/her to downshift in time. The monitoring unit 9 is preferably adapted to monitoring whether the vehicle is stationary and to receiving signals from a sensor which monitors the position of the brake pedal. If the gears are divided into respective high-speed and low-speed sections, the monitoring unit 9 according to an embodiment is adapted to detecting whether the gearbox is set in the high-speed or the low-speed section. If it finds that the gearbox is set in the high-speed section, the vehicle is stationary and the driver releases the brake pedal, the monitoring unit 9 according to this embodiment is adapted to generating a signal to the driver that a gear in the high-speed section is set. The risk that the driver might move off with the gear set in the high-speed section can thus be reduced.

According to an embodiment, when clutch wear has been assessed and the energy to the clutch has been calculated, an attempt is made to identify what the driver has done wrong, to help him/her to be able to achieve better behaviour. To this end, the system comprises according to an embodiment an identifying unit adapted to identifying what the driver has done wrong, by analysing the situation which has arisen.

To identify if the driver has used too high an initial gear, the energy $E_{slip}$ lost to the clutch when the vehicle was being set in motion is calculated. The remaining energy is used instead to accelerate the vehicle and counteract any gravitational force. During a moving-off process, the energy used to set the vehicle in motion and accelerate it is therefore calculated. The moving-off period is the same here as a clutch slip period. This energy is then used to calculate a force which was required to accelerate the vehicle as

$$F_{takeoff} = \frac{E_{takeoff}}{d_{takeoff}}, \qquad (14)$$

in which $d_{takeoff}$ is the moving-off distance and $E_{takeoff}$the remaining energy. $F_{takeoff}$ and the $d_{takeoff}$ are illustrated in Figure 5. $E_{takeoff}$ is calculated by

$$E_{takeoff} = E_1 - E_{slip}, \qquad (15)$$

in which $E_1$ is arrived at by equation (5).

To then identify whether the initial gear was or was not low enough, the engine torque $M_{takeoff}$ which was required to accelerate the vehicle initially is calculated as

$$M_{takeoff} = \frac{F_{takeoff} \cdot r_{wheel}}{i_{rear_axle} \cdot i_{gear} \cdot \eta_{gear} \cdot \eta_{axle}}, \qquad (16)$$

in which $r_{wheel}$ is wheel radius, $i_{rear-axle}$ the ratio of the rear axle, $i_{gear}$ the ratio of the initial gear, $\eta_{gear}$ and $\eta_{axle}$ the respective efficiencies of the initial gear and the axle.

The identifying unit 10 is thus adapted to calculating the engine torque $M_{takeoff}$ which was required to accelerate the vehicle for an initial distance $d_{takeoff}$.$M_{takeoff}$ is then compared with at least one predetermined value $M_{max}$ of the engine torque, and if $M_{takeoff}$ exceeds a $M_{max}$ an indicating signal is generated to the driver that the vehicle's initial gear was too high when moving off. A limit is thus set for the engine torque which is acceptable when setting the vehicle in motion. The signal may include tips to the driver for improving his/her behaviour. If $M_{takeoff}$was too high, the driver is reminded that this was so. He/she thus gradually learns which initial gears are appropriate to different road gradients and different loads. This reminder is not given if the lowest gear is already being used.

According to an embodiment, the identifying unit 10 is adapted to comparing the time $t_{slip}$ with at least one predetermined time value $t_{max}$, and if $t_{slip}$ exceeds $t_{max}$ an indicating signal is generated to the driver that the time taken to release the clutch pedal was too long. He/she may thus be made aware that the time taken to release the clutch was too long. The signal may include tips to the driver for improving his/her driving behaviour by being reminded to release the clutch more quickly moving off.

According to another embodiment, the identifying unit 10 is adapted to comparing the engine's speed $n_{eng}$ when the vehicle is being set in motion with at least one predetermined engine speed value $n_{max}$ and, if $n_{eng}$ exceeds $n_{max}$, to generating an indicating signal to the driver that the engine speed was too high when moving off. The signal may include tips for improving his/her driving behaviour by being reminded to keep the engine speed down when releasing the clutch.

The invention comprises also a method for assessing a driver's wear of a friction clutch. The method will now be explained with reference to the flowchart in Figure 7. The method comprises a first step S 1 of determining a value of the clutch energy $E_{slip}$ during a slip period, depending on the power output $P_{eng}$ and the clutch slip s. $E_{slip}$ is determined by using equations (1) to (7) set out above. A second step S2 generates an energy signal which indicates said value of $E_{slip}$. A third step S3 then compares the calculated value of the clutch energy $E_{slip}$with limits for the clutch energy. This is illustrated in Figure 3. A fourth step S4 generates a comparison signal which indicates the result of said comparison. A fifth step S5 rates the clutch wear on the basis of said result. This is also illustrated in Figure 3 in the form of a rating between 0 and 100%. A sixth step S6 generates a rating signal which indicates said rating. A seventh step S7 feeds the rating back to the driver. He/she is thus made aware of how well he/she has used the clutch as regards wear.

According to an embodiment, the method comprises determining said limits for the clutch energy $E_{slip}$ with respect to the temperature of the clutch. An example of relationships between the clutch temperature and limits for the clutch energy appears in Figure 4. If the clutch temperature is high, the limits for the clutch energy will be low.

According to another embodiment, the method comprises monitoring the driver's use of the clutch control by detecting a slip period $t_{slip}$ as an amount of time which the driver takes to release the clutch from a disconnected state to a connected state. Only the energy used during the slip period is thus taken into account in the assessment.

To avoid the driver forgetting to change gear when moving off, the method comprises, according to an embodiment, detecting settings of the gearbox 2. If the gearbox is set in a high gear, the vehicle is stationary and the driver releases the brake pedal, a signal is then generated to him/her that a high gear is set. The driver may thus be reminded to switch to low gear if he/she forgets to do so before setting the vehicle in motion. He/she then avoids moving off in too high a gear which would result in greater clutch wear. If the gearbox is divided into high-speed and low-speed sections, this setting may also be detected and the driver be warned if too high a gear is set.

According to a further embodiment, the method comprises determining the temperature of the clutch 1 and generating a signal to the driver that the temperature in the clutch 1 is high, if the vehicle has come to a halt and the temperature exceeds a predetermined threshold value. The driver may thus be made aware that the clutch temperature is too high and that a lower gear should be set for the next move-off.

To be able to identify what the driver has done wrong, the method comprises, according to an embodiment, doing an evaluation according to the method steps of the flowchart in Figure 8. This identification is based on a rating signal generated at step S6 in Figure 7. The rating is evaluated at step S80, and if it is poor, the identification of what has caused the poor rating begins. A poor rating may for example be within the range 1-5 on a scale of 1-10. Step S81 identifies whether too high an initial gear has been used. Identification of too high an initial gear is done, according to an embodiment, by calculating the engine torque $M_{takeoff}$ which was required to accelerate the vehicle for an initial distance $d_{takeoff}$ and by comparing $M_{takeoff}$with at least one predetermined value $M_{max}$ of the engine torque. Step S82 identifies whether $M_{takeoff}$ exceeds $M_{max}$, in which case a step S800 generates a signal to the driver that the vehicle's initial gear was too high when moving off. $M_{takeoff}$ may be determined by means of equations (14) to (16) above. The driver may thus be made aware that he/she used too high an initial gear.

Step S83 identifies whether the poor rating was due to too high an engine speed when moving off. This is done according to an embodiment by comparing the engine's speed $n_{eng}$ during move-off with at least one predetermined engine speed value $n_{max.}$ Step S84 identifies whether $n_{eng}$ exceeds $n_{max}$, in which case a step S800 generates an indicating signal to the driver that the engine speed was too high when moving off. The driver may thus be made aware that he/she used too high an engine speed when setting the vehicle in motion.

Step S85 identifies whether the poor rating was due to the driver having taken too much time to release the clutch when setting the vehicle in motion. This is done according to an embodiment by comparing the time $t_{slip}$ with at least one predetermined time value $t_{max.}$ The next step S86 identifies whether $t_{slip}$ exceeds $t_{max}$, in which case a step S800 generates a signal to the driver that the time taken to release the clutch pedal was too long. The driver may thus be made aware of how good he/she is at releasing the clutch as regards wear, and may be encouraged to reduce the time taken.

The above embodiments may be effected in different sequences and need not be confined to the sequence in Figure 8. It is also possible to indicate to the driver only one reason for poor ratings, thus stopping at the positive judgement arising from the first identification of fault. If there are two or more reasons for poor ratings, they may of course be communicated to the driver all together. The indicating signal to the driver may also contain tips on how to improve his/her driving behaviour. Tips from the various embodiments may for example be presented in order of priority or alternatively only the tip regarded as most important may be presented to the driver.

The invention comprises also a computer programme product comprising programme instructions for enabling a computer system in a vehicle to perform the steps according to the above method when those instructions are run on said computer system. The invention comprises also a computer programme product in which the programme instructions are stored on a medium which can be read by a computer system.

The present invention is not restricted to the embodiments described above. Sundry alternatives, modifications and equivalents may be used. The aforesaid embodiments therefore do not limit the invention's scope which is defined by the attached claims.

## Claims

1. A system for assessing a driver's wear of a friction clutch (1) situated between a gearbox (2) and an engine in a vehicle, comprising:

   - a calculation unit (3) adapted to determining a value of the clutch energy ($E_{slip}$) generated during a slip period ($t_{slip}$), depending on the vehicle's power output ($P_{eng}$) and the clutch slip (s), and to generating an energy signal which indicates said value of the clutch energy ($E_{slip}$);
   - a comparison unit (4) adapted to comparing the calculated value of the clutch energy ($E_{slip}$) with limits for the clutch energy, and to generating a comparison signal ($S_c$) which indicates the result of said comparison;
   - a rating unit (5) adapted to rating the clutch wear on the basis of said result according to a rating scale and to generating a rating signal ($S_g$) which indicates said rating, where only the energy used during the slip period ($t_{slip}$) is taken into account in the assessment; and
   - an indicating unit (6) adapted to feeding the rating back to the driver;

   **characterised in that** the system comprises

   - a time unit (7) adapted to monitoring the driver's use of the clutch control by detecting the slip period ($t_{slip}$) as the time the driver takes to release the clutch (1) from a disconnected state to a connected state, and
   - an identifying unit (10) adapted to:
   - calculating the engine torque ($M_{takeoff}$) which was required to accelerate the vehicle for an initial moving-off distance ($d_{takeoff}$), to comparing the engine torque ($M_{takeoff}$) with at least one predetermined value ($M_{max}$) of the engine torque and, if the engine torque ($M_{takeoff}$) exceeds the predetermined value ($M_{max}$) to generating an indicating signal to the driver that the initial gear was too high when moving off;
   - comparing the slip period ($t_{slip}$) with at least one predetermined time value ($t_{max}$) and, if the slip period ($t_{slip}$) exceeds the predetermined time value ($t_{max}$), to generating an indicating signal to the driver that the time taken to release the clutch pedal was too long; and
   - comparing the engine's speed ($n_{eng}$) when the vehicle is being set in motion with at least one predetermined engine speed value ($n_{max}$) and, if the engine's speed ($n_{eng}$) exceeds the predetermined engine speed ($n_{max}$), to generating an indicating signal to the driver that the engine speed was too high when setting the vehicle in motion.

**2.** A system according to claim 1, whereby the comparison unit (4) is adapted to determining said limits for the clutch energy ($E_{slip}$) as a function of the temperature of the clutch.

**3.** A system according to any one of the foregoing claims, whereby determining the value of the clutch energy ($E_{slip}$) comprises integrating the value of the power output ($P_{eng}$) and the power output ($P_{eng}$) divided by the gear ratio ($i_{transf}$).

**4.** A system according to any one of the foregoing claims, comprising a first monitoring unit (8) adapted to determining the temperature of the clutch and to generating an indicating signal to the driver that the temperature in the clutch is high, if the vehicle has come to a halt and the temperature exceeds a predetermined threshold value.

**5.** A system according to any one of the foregoing claims, comprising a second monitoring unit (9) adapted to detecting settings of the gearbox and, if the gearbox is set to a high gear, the vehicle is stationary and the driver releases the brake pedal, to generating a signal to him/her that a high gear is set.

**6.** A system according to claim 1, comprising said indicating signal to the driver containing tips related to the result(s) from the at least one comparison of the identifying unit (10).

**7.** A method for assessing a driver's wear of a friction clutch (1) situated between a gearbox (2) and an engine in a vehicle, comprising:

- monitoring the driver's use of the clutch control by detecting a slip period $t_{slip}$ as the time the driver takes to release the clutch (1) from a disconnected state to a connected state;
- determining a value of the clutch energy ($E_{slip}$) generated during the slip period ($t_{slip}$), depending on the vehicle's power output ($P_{eng}$) and the clutch slip (s), and generating an energy signal which indicates said value of the clutch energy ($E_{slip}$);
- comparing the calculated value of the clutch energy ($E_{slip}$) with limits for the clutch energy, and generating a comparison signal which indicates the result of said comparison;
- rating the clutch wear on the basis of said result according to a rating scale and generating a rating signal which indicates said rating, where only the energy used during the slip period ($t_{slip}$) is taken into account in the assessment
- feeding the rating back to the driver,
- calculating the engine torque ($M_{takcoff}$) which was required to accelerate the vehicle for an initial moving-off distance ($d_{takeoff}$), comparing the engine torque ($M_{takeoff}$), with at least one predetermined value ($M_{max}$) of the engine torque and, if the engine torque ($M_{takeoff}$) exceeds the predetermined value ($M_{max}$), generating an indicating signal to the driver that the initial gear was too high when moving off;
- comparing the slip period ($t_{slip}$), with at least one predetermined time value ($t_{max}$) and, if the slip period ($t_{slip}$) exceeds the predetermined terme value ($t_{max}$), generating an indicating signal to the driver that the time taken to release the clutch pedal was too long; and
- comparing the engine's speed ($n_{eng}$) when the vehicle is being set in motion with at least predetermined engine speed value ($n_{max}$) and, if the engine's speed ($n_{eng}$) exceeds the predetermined engine speed ($n_{max}$) generating an indicating signal to the driver that the engine speed was too high when setting the vehicle in motion.

**8.** A method according to claim 7, comprising determining said limits for the clutch energy ($E_{slip}$) as a function of the temperature of the clutch.

**9.** A method according to any one of claims 7 to 8 whereby determining the value of the clutch energy ($E_{slip}$) comprises integrating the value of the power output $P_{en}$g and the power output ($P_{eng}$) divided by the gear ratio ($i_{transf}$).

**10.** A method according to any one of claims 7 to 9, comprising detecting settings of the gearbox (2) and, if the gearbox (2) is set to a high gear, the vehicle is stationary and the driver releases the brake pedal, generating a signal to him/her that a high gear is set.

**11.** A method according to any one of claims 7 to 10, comprising determining the temperature of the clutch (1) and to generating an indicating signal to the driver that the temperature in the clutch (1) is high, if the vehicle has come to a halt and the temperature exceeds a predetermined threshold value.

**12.** A method according to claim 7, whereby said indicating signal to the driver contains tips related to the result(s) from the at least one comparison.

**13.** A computer programme product comprising programme instructions for enabling a computer system in a vehicle to perform the steps according to the method of any of claims 7 to 12 when those instructions are run on said computer system.

**14.** A computer programme product according to claim 13, in which the programme instructions are stored on a medium which can be read by a computer system.

**Patentansprüche**

**1.** System zum Beurteilen der Abnutzung einer Reibkupplung (1) durch einen Fahrer, die zwischen einem Getriebe (2) und einem Motor in einem Fahrzeug angeordnet ist, umfassend:

- eine Berechnungseinheit (3), die dazu eingerichtet ist, einen Wert der Kupplungsenergie ($E_{Schlupf}$) zu ermitteln, die während einer Schlupfperiode ($t_{Schlupf}$) erzeugt wird, abhängig von der Ausgangsleistung ($P_{Motor}$) des Fahrzeugs und dem Kupplungsschlupf (s), und ein Energiesignal zu erzeugen, das den Wert der Kupplungsenergie ($E_{Schlupf}$) angibt;
- eine Vergleichseinheit (4), die dazu eingerichtet ist, den berechneten Wert der Kupplungsenergie ($E_{Schlupf}$) mit Grenzwerten für die Kupplungsenergie zu vergleichen und ein Vergleichssignal ($S_c$) zu erzeugen, das das Ergebnis des Vergleichs angibt;
- eine Bewertungseinheit (5), die dazu eingerichtet ist, die Kupplungsabnutzung auf Basis des Ergebnisses gemäß einer Bewertungsskala zu bewerten und ein Bewertungssignal ($S_g$) zu erzeugen, das die Bewertung angibt, wobei nur die Energie, die während der Schlupfperiode ($t_{Schlupf}$) verwendet wurde, bei der Beurteilung berücksichtigt wird; und
- eine Anzeigeeinheit (6), die dazu eingerichtet ist, die Bewertung zurück zum Fahrer zu führen;

**dadurch gekennzeichnet, dass** das System umfasst:

- eine Zeiteinheit (7), die dazu eingerichtet ist, das Benutzen der Kupplungssteuerung durch den Fahrer zu überwachen, indem die Schlupfperiode ($t_{Schlupf}$) als die Zeit erfasst wird, die der Fahrer benötigt, um die Kupplung (1) von einem nicht verbundenen Zustand in einen verbundenen Zustand loszulassen, und
- eine Erkennungseinheit (10), die dazu eingerichtet ist:
- ein Motordrehmoment ($M_{Start}$) zu berechnen, das erforderlich war, um das Fahrzeug für eine anfängliche Losfahrstrecke ($d_{Start}$) zu beschleunigen, das Motordrehmoment ($M_{Start}$) mit mindestens einem vorbestimmten Wert ($M_{Max}$) des Motordrehmoments zu vergleichen, und, wenn das Motordrehmoment ($M_{Start}$) den vorbestimmten Wert ($M_{Max}$) übersteigt, ein Signal zu erzeugen, das dem Fahrer anzeigt, dass der anfängliche Gang beim Losfahren zu hoch war;
- die Schlupfperiode ($t_{Schlupf}$) mit mindestens einem vorbestimmten Zeitwert ($t_{Max}$) zu vergleichen und, wenn die Schlupfperiode ($t_{Schlupf}$) den vorbestimmten Zeitwert ($t_{Max}$) übersteigt, ein anzeigendes Signal für den Fahrer zu erzeugen, dass die Zeit zum Loslassen des Kupplungspedals zu lang war; und,
- wenn das Fahrzeug in Bewegung gesetzt wird, die Motordrehzahl ($n_{Motor}$) mit mindestens einem vorbestimmten Motordrehzahlwert ($n_{Max}$) zu vergleichen und, wenn die Motodrehzahl ($n_{Motor}$) die vorbestimmte Motordrehzahl ($n_{Max}$) übersteigt, ein Signal zu erzeugen, das dem Fahrer anzeigt, dass die Motordrehzahl zu hoch war, als das Fahrzeug in Bewegung gesetzt worden ist.

**2.** System nach Anspruch 1, wobei die Vergleichseinheit (4) dazu eingerichtet ist, die Grenzwerte für die Kupplungsenergie ($E_{Schlupf}$) als eine Funktion der Temperatur der Kupplung zu ermitteln.

**3.** System nach einem der vorangehenden Ansprüche, wobei das Ermitteln des Wertes der Kupplungsenergie ($E_{Schlupf}$) vorsieht, den Wert der Abgabeleistung ($P_{Motor}$) und der Abgabeleistung ($P_{Motor}$) geteilt durch die Getriebeübersetzung ($i_{Übers.}$) zu integrieren.

**4.** System nach einem der vorangehenden Ansprüche, umfassend eine erste Überwachungseinheit (8), die dazu eingerichtet ist, die Temperatur der Kupplung zu ermitteln und ein Signal zu erzeugen, das dem Fahrer anzeigt, dass die Temperatur in der Kupplung hoch ist, wenn das Fahrzeug zum Anhalten kommt und die Temperatur einen vorbestimmten Grenzwert übersteigt.

**5.** System nach einem der vorangehenden Ansprüche, umfassend eine zweite Überwachungseinheit (9), die dazu eingerichtet ist, Einstellungen des Getriebes zu erkennen und, wenn das Getriebe in einen hohen Gang gestellt ist, das Fahrzeug unbewegt ist und der Fahrer das Bremspedal loslässt, ein Signal für ihn/sie zu erzeugen, das anzeigt, dass ein hoher Gang eingestellt ist.

**6.** System nach Anspruch 1, das das anzeigende Signal für den Fahrer umfasst, das Hinweise bezüglich des Ergebnisses/der Ergebnisse des mindestens einen Vergleichs der Erkennungseinheit (10) umfasst.

**7.** Verfahren zum Beurteilen der Abnutzung einer Reibkupplung (1) durch einen Fahrer, die angeordnet ist zwischen einem Getriebe (2) und einem Motor in einem Fahrzeug, umfassend:

- Überwachen des Benutzens einer Kupplungsbedienung durch den Fahrer, durch Erkennen einer Schlupfperiode ($t_{schlupf}$) als die Zeit, die der Fahrer benötigt, um die Kupplung (1) von einem nicht verbundenen Zustand in einen verbundenen Zustand loszulassen;
- Ermitteln eines Wertes der Kupplungsenergie ($E_{Schlupf}$), die während der Schlupfperiode ($t_{Schlupf}$) erzeugt wird, abhängig von der Ausgangsleistung ($P_{Motor}$) des Fahrzeugs und dem Kupplungsschlupf (s), und Erzeugen eines Energiesignals, das den Wert der Kupplungsenergie ($E_{Schlupf}$) angibt;
- Vergleichen des berechneten Werts der Kupplungsenergie ($E_{Schlupf}$) mit Grenzwerten für die Kupplungsenergie, und Erzeugen eines Vergleichssignals, das das Ergebnis des Vergleichs angibt;
- Bewerten der Kupplungsabnutzung auf Basis des Ergebnisses gemäß einer Bewertungsskala und Erzeugen eines Bewertungssignals, das die Bewertung angibt, wobei nur die Energie, die während der Schlupfperiode ($t_{Schlupf}$) verwendet wurde, für die Beurteilung berücksichtigt wird;
- Zurückführen der Bewertung zu dem Fahrer;
- Berechnen des Motordrehmoments ($M_{Start}$), das erforderlich war, um das Fahrzeug für eine anfängliche Losfahrstrecke ($d_{Start}$) zu beschleunigen, Vergleichen des Motordrehmoments ($M_{Start}$) mit mindestens einem vorbestimmten Wert ($M_{Max}$) des Motordrehmoments und, wenn das Motordrehmoment ($M_{Start}$) den vorbestimmten Wert ($M_{Max}$) übersteigt, ein Signal zu erzeugen, das dem Fahrer anzeigt, dass der anfängliche Gang beim Losfahren zu hoch war;
- Vergleichen der Schlupfperiode ($t_{Schlupf}$) mit mindestens einem vorbestimmten Wert ($t_{Max}$) und, wenn die Schlupfperiode ($t_{Schlupf}$) den vorbestimmten Zeitwert ($t_{Max}$) übersteigt, ein Signal zu erzeugen, das dem Fahrer anzeigt, dass die Zeit zum Loslassen des Kupplungspedals zu lang war; und,
- wenn das Fahrzeug in Bewegung gesetzt wird, Vergleichen der Motordrehzahl ($n_{Motor}$) mit mindestens einem vorbestimmten Motordrehzahlwert ($n_{Max}$) und, wenn die Motordrehzahl ($n_{Motor}$) die vorbestimmte Motordrehzahl ($n_{Max}$) übersteigt, ein Signal zu erzeugen, das dem Fahrer anzeigt, dass die Motordrehzahl zu hoch war, als das Fahrzeug in Bewegung gesetzt worden ist.

**8.** Verfahren nach Anspruch 7, das ein Ermitteln der Grenzwerte der Kupplungsenergie ($E_{Schlu}p_f$) als eine Funktion der Temperatur der Kupplung umfasst.

**9.** Verfahren nach Anspruch 7 oder 8, wobei das Ermitteln des Wertes der Kupplungsenergie ($E_{Shlupf}$) umfasst, den Wert der Ausgangsleistung ($P_{Motor}$) und der Ausgangsleistung ($P_{Motor}$) geteilt durch die Getriebeübersetzung ($i_{Übers.}$) zu integrieren.

**10.** Verfahren nach Anspruch 7, 8 oder 9, umfassend ein Ermitteln von Einstellungen des Getriebes (2) und, wenn das Getriebe (2) in einen hohen Gang gestellt ist, das Fahrzeug unbewegt ist und der Fahrer das Bremspedal loslässt, ein Erzeugen eines Signals für ihn/sie, das anzeigt, dass ein hoher Gang eingelegt ist.

**11.** Verfahren nach einem der Ansprüche 7 bis 10, umfassend ein Ermitteln der Temperatur der Kupplung (1) und ein Erzeugen eines Signals, das dem Fahrer anzeigt, dass die Temperatur der Kupplung (1) zu hoch ist, wenn das Fahrzeug zum Anhalten gekommen ist und die Temperatur einen vorbestimmten Grenzwert übersteigt.

**12.** Verfahren nach Anspruch 7, wobei das anzeigende Signal für den Fahrer Hinweise bezüglich des Ergebnisses/der Ergebnisse des mindestens einen Vergleichs umfasst.

**13.** Computerprogrammprodukt umfassend Programmanweisungen, die dafür vorgesehen sind, ein Computersystem in einem Fahrzeug zu befähigen, die Schritte gemäß des Verfahrens nach einem der Ansprüche 7 bis 12 auszuführen, wenn diese Anweisungen auf dem Computersystem ausgeführt werden.

**14.** Computerprogrammprodukt nach Anspruch 13, bei dem die Programmanweisungen auf einem Medium gespeichert sind, das von einem Computersystem lesbar ist.

## Revendications

1. Système d'évaluation de l'usure exercée par un conducteur sur un embrayage à friction (1) situé entre une boîte de vitesse (2) et un moteur d'un véhicule, comprenant :

   - une unité de calcul (3) conçue pour déterminer une valeur de l'énergie d'embrayage ($E_{slip}$) générée pendant une période de glissement ($t_{slip}$), dépendant de la puissance de sortie du véhicule ($P_{eng}$) et du ou des glissements de l'embrayage, et générer un signal d'énergie qui indique ladite valeur de l'énergie d'embrayage ($E_{slip}$) ;
   - une unité de comparaison (4) conçue pour comparer la valeur calculée de l'énergie d'embrayage ($E_{slip}$) à des limites pour l'énergie d'embrayage, et générer un signal de comparaison ($S_c$) qui indique le résultat de ladite comparaison ;
   - une unité de notation (5) conçue pour noter l'usure d'embrayage en fonction dudit résultat, selon une échelle de notation, et générer un signal de notation (Sg) qui indique ladite notation, où seule l'énergie utilisée pendant la période de glissement ($t_{slip}$) est prise en compte dans l'évaluation ; et
   - une unité d'indication (6) conçue pour fournir la notation au conducteur en retour d'information ;

   **caractérisé en ce que** le système comprend

   - une unité de temps (7) conçue pour surveiller l'utilisation faite par le conducteur de la commande d'embrayage en détectant la période de glissement ($t_{slip}$) comme le temps pris par le conducteur pour relâcher l'embrayage (1) d'un état déconnecté vers un état connecté, et
   - une unité d'identification (10) conçue pour :
   - calculer le couple moteur ($M_{takeoff}$) qui a été requis pour accélérer le véhicule sur une distance de déplacement initiale ($d_{takeoff}$), comparer le couple moteur ($M_{takeoff}$) à au moins une valeur prédéterminée ($M_{max}$) du couple moteur et, si le couple moteur ($M_{takeoff}$) excède la valeur prédéterminée ($M_{max}$), générer un signal d'indication au conducteur que le rapport d'engrenage initial était trop élevé lors de la mise en déplacement ;
   - comparer la période de glissement ($t_{slip}$) à au moins une valeur de temps prédéterminée ($t_{max}$) et, si la période de glissement ($t_{slip}$) excède la valeur de temps prédéterminée ($t_{max}$), générer un signal d'indication au conducteur que le temps pris pour relâcher la pédale d'embrayage était trop long ; et
   - comparer la vitesse du moteur ($n_{eng}$) lorsque le véhicule est mis en mouvement à au moins une valeur de vitesse de moteur prédéterminée ($n_{max}$) et, si la vitesse du moteur ($n_{eng}$) excède la vitesse de moteur prédéterminée ($n_{max}$), générer un signal d'indication au conducteur que la vitesse du moteur était trop élevée lors de la mise en mouvement du véhicule.

2. Système selon la revendication 1, dans lequel l'unité de comparaison (4) est conçue pour déterminer lesdites limites pour l'énergie d'embrayage ($E_{slip}$) en fonction de la température de l'embrayage.

3. Système selon l'une quelconque des revendications précédentes, dans lequel la détermination de la valeur de l'énergie d'embrayage ($E_{slip}$) comprend l'intégration de la valeur de la puissance de sortie ($P_{eng}$) et la puissance de sortie ($P_{eng}$) divisée par le rapport d'engrenage ($i_{transf}$).

4. Système selon l'une quelconque des revendications précédentes, comprenant une première unité de surveillance (8) conçue pour déterminer la température de l'embrayage et pour générer un signal d'indication au conducteur que la température dans l'embrayage est élevée, si le véhicule s'est arrêté et la température excède une valeur seuil prédéterminée.

5. Système selon l'une quelconque des revendications précédentes, comprenant une deuxième unité de surveillance (9) conçue pour détecter des réglages de la boîte de vitesse et, si la boîte de vitesse est réglée à un rapport d'engrenage élevé, le véhicule est stationnaire et le conducteur relâche la pédale de frein, générer un signal à son attention indiquant qu'un rapport d'engrenage élevé est réglé.

6. Système selon la revendication 1, comprenant ledit signal d'indication au conducteur contenant des éléments concernant le ou les résultats de l'au moins une comparaison de l'unité d'identification (10).

7. Procédé d'évaluation de l'usure exercée par un conducteur sur un embrayage à friction (1) situé entre une boîte de vitesse (2) et un moteur d'un véhicule, comprenant les étapes consistant à :

- surveiller l'utilisation faite par le conducteur de la commande d'embrayage en détectant la période de glissement ($t_{slip}$) comme le temps pris par le conducteur pour relâcher l'embrayage (1) d'un état déconnecté vers un état connecté ;
- déterminer une valeur de l'énergie d'embrayage ($E_{slip}$) générée pendant la période de glissement ($t_{slip}$), dépendant de la puissance de sortie du véhicule ($P_{eng}$) et du ou des glissements de l'embrayage, et générer un signal d'énergie qui indique ladite valeur de l'énergie d'embrayage ($E_{slip}$) ;
- comparer la valeur calculée de l'énergie d'embrayage ($E_{slip}$) à des limites pour l'énergie d'embrayage, et générer un signal de comparaison qui indique le résultat de ladite comparaison ;
- noter l'usure d'embrayage en fonction dudit résultat, selon une échelle de notation, et générer un signal de notation qui indique ladite notation, où seule l'énergie utilisée pendant la période de glissement ($t_{slip}$) est prise en compte dans l'évaluation ;
- fournir la notation au conducteur en retour d'information ;
- calculer le couple moteur ($M_{takeoff}$) qui a été requis pour accélérer le véhicule sur une distance de déplacement initiale ($d_{takeoff}$), comparer le couple moteur ($M_{takeoff}$) à au moins une valeur prédéterminée ($M_{max}$) du couple moteur et, si le couple moteur ($M_{takeoff}$) excède la valeur prédéterminée ($M_{max}$), générer un signal d'indication au conducteur que le rapport d'engrenage initial était trop élevé lors de la mise en déplacement ;
- comparer la période de glissement ($t_{slip}$) à au moins une valeur de temps prédéterminée ($t_{max}$) et, si la période de glissement ($t_{slip}$) excède la valeur de temps prédéterminée ($t_{max}$), générer un signal d'indication au conducteur que le temps pris pour relâcher la pédale d'embrayage était trop long ; et
- comparer la vitesse du moteur ($n_{eng}$) lorsque le véhicule est mis en mouvement à au moins une valeur de vitesse de moteur prédéterminée ($n_{max}$) et, si la vitesse du moteur ($n_{eng}$) excède la vitesse de moteur prédéterminée ($n_{max}$), générer un signal d'indication au conducteur que la vitesse du moteur était trop élevée lors de la mise en mouvement du véhicule.

**8.** Procédé selon la revendication 7, comprenant la détermination desdites limites pour l'énergie d'embrayage ($E_{slip}$) en fonction de la température de l'embrayage.

**9.** Procédé selon l'une quelconque des revendications 7 à 8, dans lequel la détermination de la valeur de l'énergie d'embrayage ($E_{slip}$) comprend l'intégration de la valeur de la puissance de sortie ($P_{eng}$) et de la valeur de puissance de sortie ($P_{eng}$) divisée par le rapport d'engrenage ($i_{transf}$).

**10.** Procédé selon l'une quelconque des revendications 7 à 9, comprenant les étapes consistant à détecter des réglages de la boîte de vitesse (2) et, si la boîte de vitesse (2) est réglée à un rapport d'engrenage élevé, le véhicule est stationnaire et le conducteur relâche la pédale de frein, générer un signal à son attention indiquant qu'un rapport d'engrenage élevé est réglé.

**11.** Procédé selon l'une quelconque des revendications 7 à 10, comprenant les étapes consistant à déterminer la température de l'embrayage (1) et à générer un signal d'indication au conducteur que la température de l'embrayage (1) est élevée, si le véhicule s'est arrêté et la température excède une valeur seuil prédéterminée.

**12.** Procédé selon la revendication 7, dans lequel ledit signal d'indication au conducteur contient des éléments concernant le ou les résultats de l'au moins une comparaison.

**13.** Produit de programme informatique comprenant des instructions de programme pour permettre à un système informatique se trouvant dans un véhicule d'exécuter les étapes selon le procédé de l'une quelconque des revendications 7 à 12, lorsque ces instructions sont exécutées sur ledit système informatique.

**14.** Produit de programme informatique selon la revendication 13, dans lequel les instructions de programme sont stockées sur un support qui peut être lu par un système informatique.

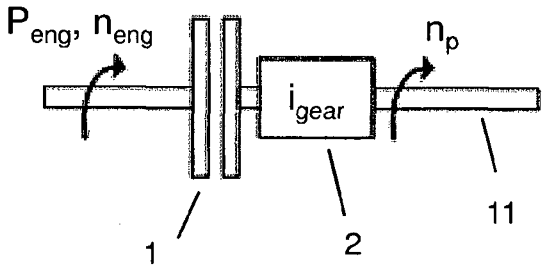


FIG. 1

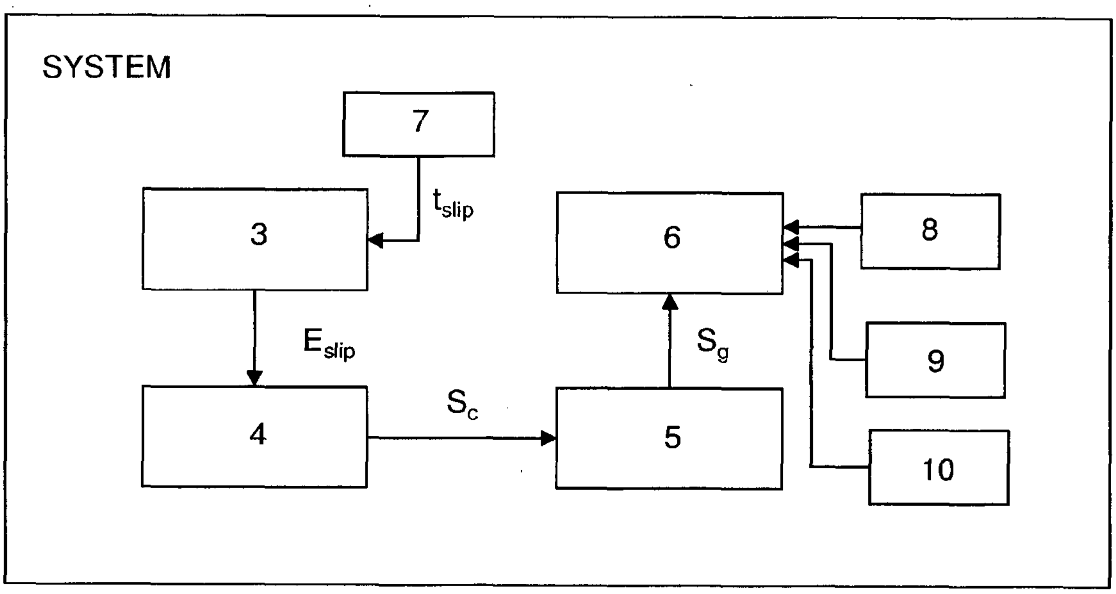


FIG. 2

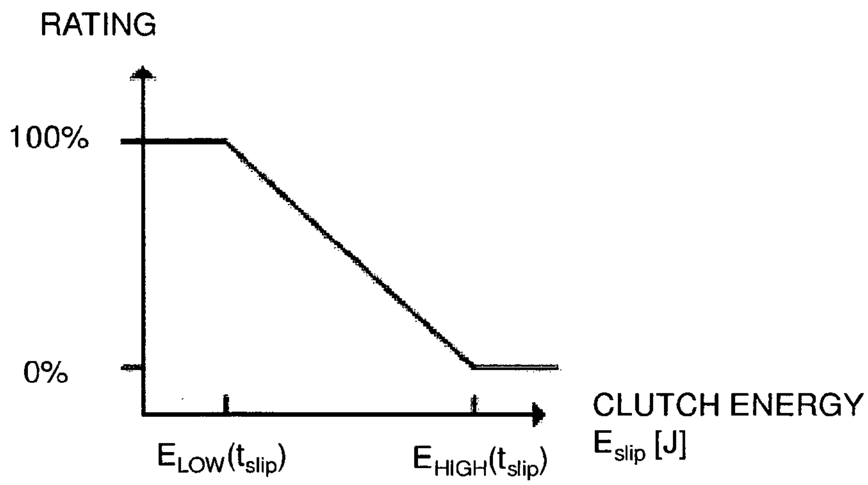
RATING
100%
0%
CLUTCH ENERGY
$E_{slip}$ [J]
$E_{LOW}(t_{slip})$
$E_{HIGH}(t_{slip})$

FIG. 3

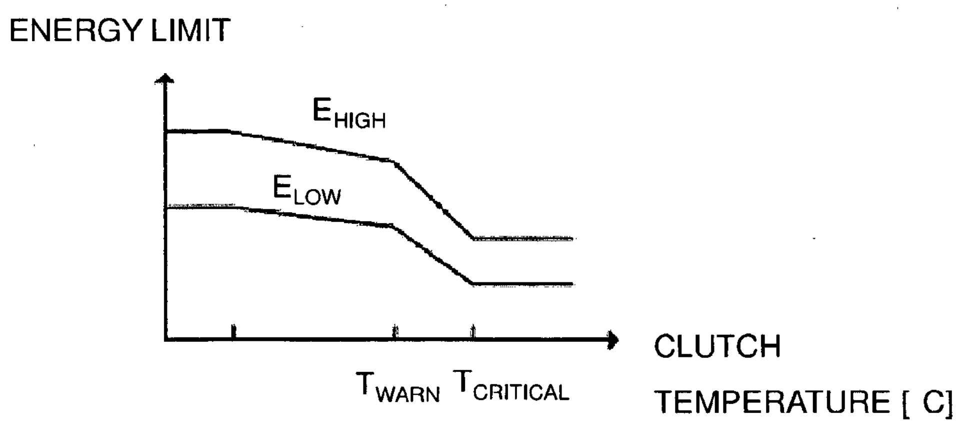
ENERGY LIMIT
$E_{HIGH}$
$E_{LOW}$
$T_{WARN}$
$T_{CRITICAL}$
CLUTCH
TEMPERATURE [ C]

FIG. 4

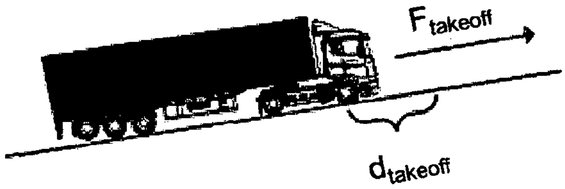
$F_{takeoff}$
$d_{takeoff}$

FIG. 5

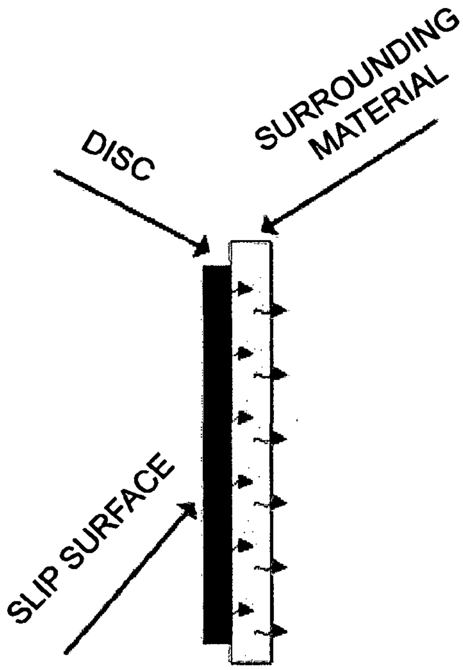
SURROUNDING MATERIAL
DISC
SLIP SURFACE

FIG. 6

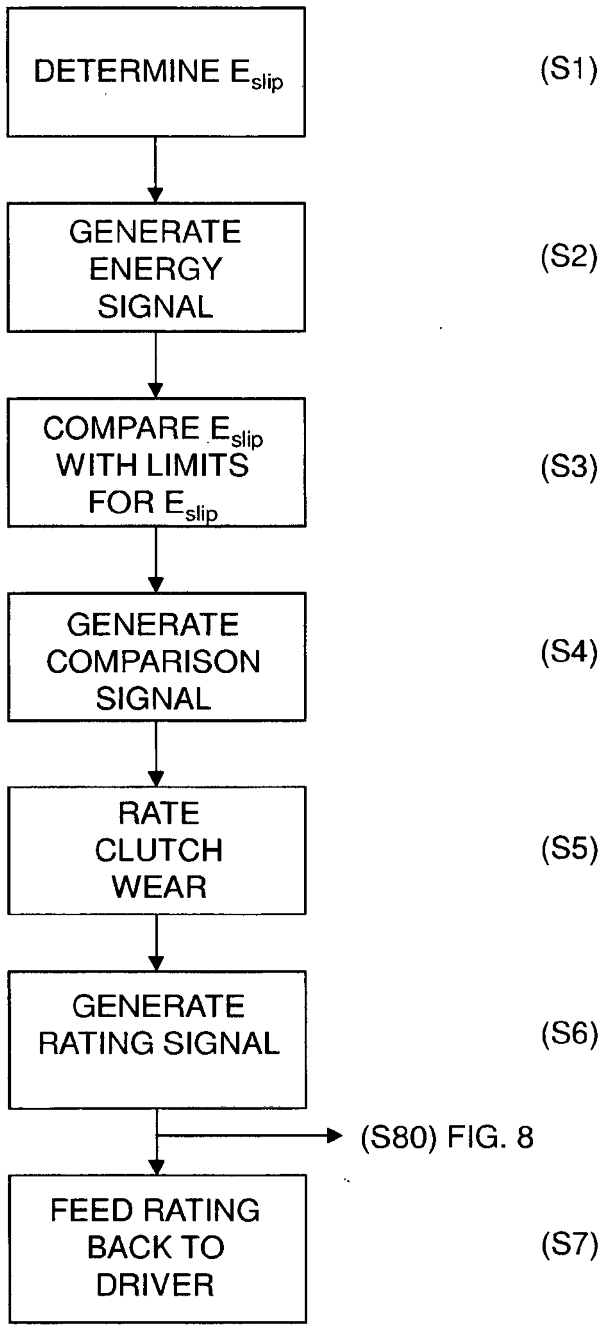
DETERMINE $E_{slip}$
(S1)
GENERATE ENERGY SIGNAL
(S2)
COMPARE $E_{slip}$ WITH LIMITS FOR $E_{slip}$
(S3)
GENERATE COMPARISON SIGNAL
(S4)
RATE CLUTCH WEAR
(S5)
GENERATE RATING SIGNAL
(S6)
(S80) FIG. 8
FEED RATING BACK TO DRIVER
(S7)

FIG. 7

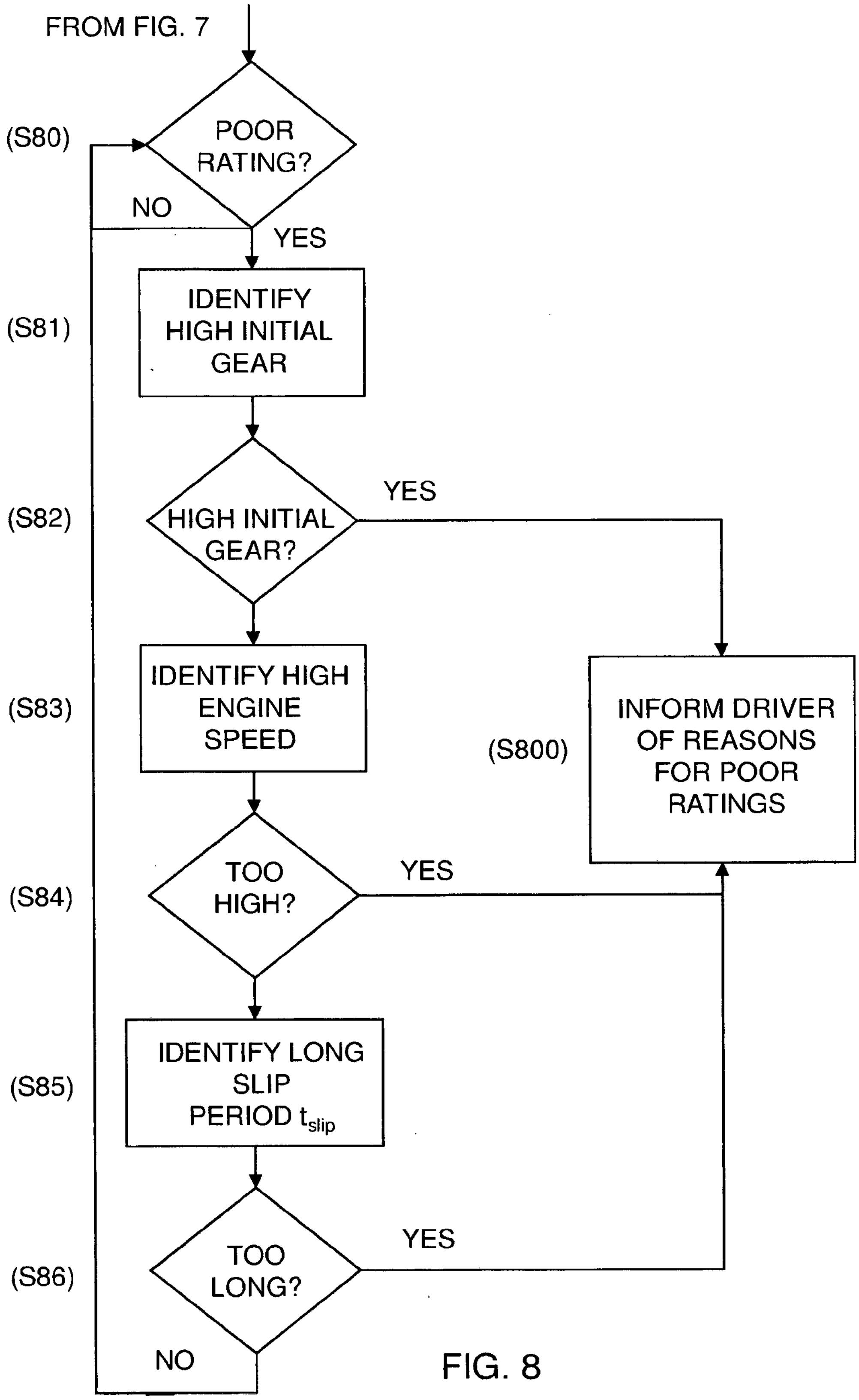
FROM FIG. 7
(S80)
POOR RATING?
NO
YES
(S81)
IDENTIFY HIGH INITIAL GEAR
(S82)
HIGH INITIAL GEAR?
YES
(S83)
IDENTIFY HIGH ENGINE SPEED
(S800)
INFORM DRIVER OF REASONS FOR POOR RATINGS
(S84)
TOO HIGH?
YES
(S85)
IDENTIFY LONG SLIP PERIOD $t_{slip}$
(S86)
TOO LONG?
YES
NO

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010200357 A
- EP 1482196 A
- DE 102008007559
- WO 2010020520 A
- WO 0172546 A